(19) **Europäisches Patentamt / European Patent Office / Office européen des brevets**

(11) **EP 4 742 008 A1**

(12) **EUROPEAN PATENT APPLICATION**
published in accordance with Art. 153(4) EPC

(43) Date of publication:
**13.05.2026 Bulletin 2026/20**

(21) Application number: **24879985.0**

(22) Date of filing: **25.09.2024**

(51) International Patent Classification (IPC):
*G06F 3/01* (2006.01)   *H04N 13/363* (2018.01)

(52) Cooperative Patent Classification (CPC):
**G06F 3/01; H04N 13/363**

(86) International application number:
**PCT/KR2024/014431**

(87) International publication number:
**WO 2025/084646 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023 KR 20230139753**

(71) Applicant: **Samsung Electronics Co., Ltd.**
**Suwon-si, Gyeonggi-do 16677 (KR)**

(72) Inventors:
• **KANG, Heungsuk**
**Suwon-si Gyeonggi-do 16677 (KR)**
• **EOM, Gimun**
**Suwon-si Gyeonggi-do 16677 (KR)**
• **HAHM, Cheulhee**
**Suwon-si Gyeonggi-do 16677 (KR)**

(74) Representative: **Appleyard Lees IP LLP**
**G Mill**
**Dean Clough Industrial Park**
**Halifax HX3 5AH (GB)**

(54) **ELECTRONIC DEVICE AND CONTROL METHOD THEREFOR**

(57)    An electronic device is disclosed. A processor of the device controls a projection unit to project a content image onto a projection surface, identifies, on the basis of a sensing value of at least one of a plurality of sensors, a point touched by a user with respect to the content image projected onto the projection surface, calculates an error value of the identified point on the basis of an error value of a grid point comprising the identified point among a plurality of grids, and recognizes an actual touch point by correcting the identified point on the basis of the error value and coordinate values of the identified point.

FIG. 1

**EP 4 742 008 A1**

**Description**

[TECHNICAL FIELD]

The disclosure relates to an electronic apparatus and a control method therefor.

[BACKGROUND ART]

Fueled by the development of electronic technologies, use of not only a conventional display device, but also an electronic apparatus that projects an image onto a projection surface without including a display in itself such as a projector is increasing.

A projector can implement a large screen easily compared to other types of display devices by implementing an image by projecting a light onto a screen.

For controlling a conventional projector, a user had to manipulate a button of a remote control or a body of a projector in most cases. Accordingly, there is a rising need for a technology that enables more convenient control of a projector from a user's stance.

[DISCLOSURE OF INVENTION]

[SOLUTION TO PROBLEM]

According to at least one embodiment of the disclosure, an electronic apparatus includes a projection part, a plurality of sensors, memory storing error map data including a plurality of grids set for correction of a touch point and error values of each corner point of the grids, and a processor. The processor may control the projection part to project a content image onto a projection surface, identify a touch point of a user for the content image projected onto the projection surface based on sensing values of the plurality of sensors, and calculate an error value of the identified point based on error values of each corner point of a grid including the identified touch point among the plurality of grids, and recognize an actual touch point by correcting the identified touch point based on coordinate values of the identified touch point and the error value of the identified touch point.

A control method for an electronic apparatus according to at least one embodiment of the disclosure includes the steps of projecting a content image onto a projection surface, identifying a point touched by a user for the content image projected onto the projection surface, calculating an error value of the identified touch point based on pre-stored error map data, and recognizing an actual touch point by correcting the identified touch point based on coordinate values and the error value of the identified touch point. The error map data includes a plurality of grids set for correction of a touch point and error values of each corner point of the grids.

According to at least one embodiment of the disclosure, in a non-transitory computer-readable recording medium storing a program for performing a method of generating error map data, the method includes the steps of projecting a test image including a plurality of sample points onto a projection surface, based on the plurality of sample points being sequentially touched, identifying a touched point, calculating error values by comparing coordinate values of each of the plurality of sample points and coordinate values of the identified touch point, while the test image and the plurality of grids are matched, identifying corner points of a grid enclosing each of the plurality of sample points to calculate weights according to distances between the identified corner points and the plurality of sample points, calculating error values of each corner point of the grid by accumulating the calculated error values and the weights for each of the plurality of sample points, and adjusting the error values of each corner point of the grid stored in the memory to the calculated error values.

[DESCRIPTION OF DRAWINGS]

FIG. 1 is a diagram for illustrating an electronic apparatus according to at least one embodiment of the disclosure;
FIG. 2 is a block diagram illustrating a configuration of an electronic apparatus according to at least one embodiment of the disclosure;
FIG. 3 is a diagram for illustrating a user touch for an electronic apparatus according to at least one embodiment of the disclosure;
FIG. 4 is a diagram for illustrating a method of generating error map data of an electronic apparatus according to at least one embodiment of the disclosure;
FIG. 5 is a diagram for illustrating a process of correcting a user touch point according to at least one embodiment of the disclosure;

FIG. 6 is a diagram for illustrating a calibration method according to at least one embodiment of the disclosure;

FIG. 7 is a flow chart for illustrating a control method for an electronic apparatus according to at least one embodiment of the disclosure; and

FIG. 8 is a flow chart for illustrating a method of performing a calibration function of an electronic apparatus according to at least one embodiment of the disclosure.

[MODE FOR INVENTION]

As terms used in the various embodiments of the disclosure, general terms that are currently used widely were selected as far as possible, in consideration of the functions described in the disclosure. However, the terms may vary depending on the intention of those skilled in the art who work in the pertinent field or previous court decisions, or emergence of new technologies, etc. Further, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in the disclosure, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or "B" or "A and B."

Further, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, singular expressions include plural expressions, as long as they do not obviously mean differently in the context. In addition, in the disclosure, terms such as "include" and "consist of' should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Further, in the disclosure, "a module" or "a part" performs at least one function or operation, and may be implemented as hardware or software, or as a combination of hardware and software. In addition, a plurality of "modules" or "parts" may be integrated into at least one module and implemented as at least one processor (not shown), except "a module" or "a part" that needs to be implemented as specific hardware.

Also, in the disclosure, the term "user" may refer to a person who uses an electronic apparatus or an apparatus used by the person.

Hereinafter, an embodiment of the disclosure will be described in more detail with reference to the accompanying drawings.

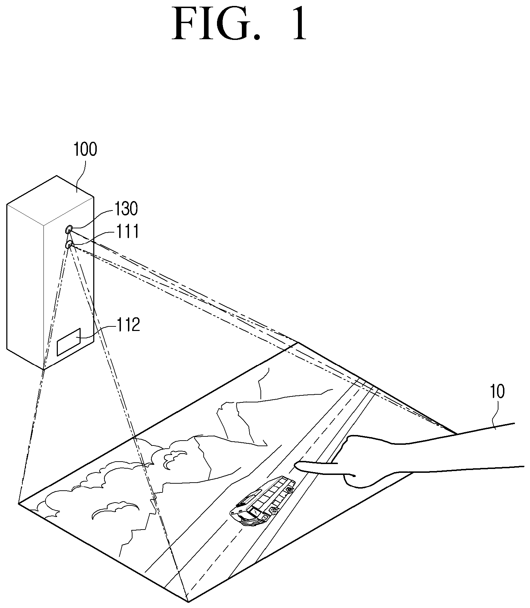

FIG. 1 is a diagram for illustrating an electronic apparatus according to at least one embodiment of the disclosure. The electronic apparatus 100 in FIG. 1 may be implemented as a projector, a TV, a monitor, and other various display devices. Hereinafter, explanation will be described based on a case wherein the electronic apparatus 100 is implemented as a projector.

Referring to FIG. 1, the electronic apparatus 100 according to an embodiment of the disclosure may project a content image onto a projection surface by using a projection part 130. FIG. 1 illustrates a case wherein a bottom surface is used as a projection surface. However, the disclosure is not limited thereto, and projection is possible on various projection surfaces such as a wall surface, a ceiling surface, a screen, furniture exterior, home appliance exterior, etc. A user 10 may input various types of user commands by directly touching a content image projected onto a projection surface. The electronic apparatus 100 may identify a touch point of the user, and perform various types of control operations corresponding to the touch point.

For example, in case the electronic apparatus 100 is connected with an external device such as a TV, a computer, a tablet, etc., the electronic apparatus 100 may project a screen of the external device onto the bottom surface. In case the screen of the external device is a web page, if the user touches a random object within the web page projected onto the bottom surface, the electronic apparatus 100 may change the web page.

As still another example, in case the electronic apparatus 100 is interlocked with a mobile device, a screen of the mobile device is projected onto the projection surface through the electronic apparatus 100. The user may send a message or execute an application by directly touching the screen of the mobile device projected onto the projection surface. In case the screen of the external device is a smartphone screen wherein various types of application icons are aligned, if the user touches a specific icon, the electronic apparatus 100 may transmit an execution command that makes an application corresponding to the touched icon executed to the external device, i.e., a smartphone, or transmit a touch coordinate within the screen. Meanwhile, in case the electronic apparatus 100 connected with an external electronic apparatus projects a screen of the external electronic apparatus through the projection part 130, the size of a content image expressed on the projection surface, i.e., the screen of the external electronic apparatus, and the size of the actual screen may be different. The electronic apparatus 100 may detect a touch coordinate on the actual electronic screen in consideration of the entire size and the aspect ratio of the content image expressed on the projection surface.

The electronic apparatus 100 may identify a point touched by the user by using at least one sensor. FIG. 1 illustrates a case wherein a first sensor 111 and a second sensor 112 arranged on the lower side are included, but the disclosure is not necessarily limited thereto.

The first sensor 111 may consist of an infrared detection camera, an RGB camera, or a combination thereof. The first sensor 111 is arranged around the projection part 130 on the upper side of the body of the electronic apparatus 100. The first sensor 111 may sense the side of the projection surface onto which the projection part 130 projects an image. In FIG. 1, the first sensor 111 may perform sensing in a direction that is tilted toward the bottom surface.

The second sensor 112 may consist of an IR scanner and an IR sensor. The second sensor 112 is arranged on the lower side based on the body of the electronic apparatus 100, and may perform sensing in a direction that is almost horizontal to the bottom surface. If the IR scanner projects infrared rays in a direction that is almost horizontal to the bottom surface, the infrared rays collide with an object on the bottom surface and are reflected. All of the reflected infrared rays may be incident on the sides of the IR sensor and the first sensor 110.

The electronic apparatus 100 may determine whether there was a user touch for a content image projected by the projection part 130 based on sensing values of the first and second sensors 111, 112.

Meanwhile, in the case of touching a screen projected by the electronic apparatus 100, but not directly touching the actual screen of the external device, it may be difficult for the electronic apparatus 100 to correctly identify the actual point touched by the user. In FIG. 1, if various types of external objects such as the user's finger or a touch pen, etc. are recognized based on a sensing value of the second sensor 112 located to be close to the bottom surface, the electronic apparatus 100 may recognize that there was a user touch for the bottom surface, and identify the location of the external object based on a sensing value of the first sensor 111. In such a case, the actual touched point and the point identified by the electronic apparatus 100 may be different by various variables such as a photographing angle of the first sensor 111 and the form of the external object, etc.

The projector according to at least one embodiment of the disclosure utilizes error map data for correcting such a difference. The error map data includes data that measured errors between touch points of the user and identified points for each area through preliminary experiments and organized them for correcting touch points. Specifically, an error map may consist of a plurality of grids that were set for correction of touch points. The error map data may include various types of information such as the number, the shapes, the sizes, etc. of the plurality of grids, and error values, coordinate values, etc. of corner points of each grid. A grid means a unit which, in case an entire error map was divided into a plurality of areas, defines one area among them. A grid may alternatively be referred to as various terms such as a cell, a grid cell, a sector, an area, etc., but it will be described as a grid in the disclosure.

A grid may consist of a square form, and for each corner point, error values that recorded touch errors in the grid and ambient grids may be calculated. Grids and error values of corner points, etc. will be explained in detail again in the parts described below.

The electronic apparatus 100 may correct an identified point, and recognize an actual touch point by using the error map data. Hereinafter, various operations of the electronic apparatus 100 will be explained in detail.

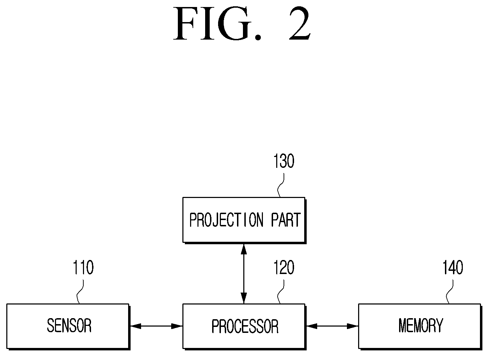

FIG. 2 is a block diagram illustrating a configuration of an electronic apparatus according to at least one embodiment of the disclosure.

The electronic apparatus 100 includes a sensor 110, a processor 120, a projection part 130, and memory 140.

The sensor 110 is a component for identifying a touch point when the user 10 touches a content image projected onto the projection surface. According to FIG. 1, the sensor 110 may include a first sensor 111 and a second sensor 112.

As described above, the first sensor 111 may be implemented as an infrared detection camera, an RGB camera, or a combination thereof, and the second sensor 112 may be implemented as an IR scanner and an IR sensor. However, the disclosure is not necessarily limited thereto, and the second sensor 112 may consist of an ultrasonic sensor.

Specifically, the first sensor 111 may include a lens assembly, a filter, and an image sensor. The lens assembly may refract and project a light incident from the outside, and transmit the light to the side of the image sensor. The filter may make a light of a specific band pass through. In the case of an infrared detection camera, the filter may include a band pass filter that makes a light of an infrared band pass through. The image sensor may generate an image corresponding to the infrared rays that passed through the filter. The image sensor may be implemented as a charged coupled device (CCD) sensor or a complementary metal oxide semiconductor (CMOS) sensor.

The second sensor 112 may include a laser diode for emitting infrared rays, and a reflector for reflecting infrared rays emitted from the laser diode to the front side of the electronic apparatus 100. The reflector may consist of various shapes such as a cone shape or a curved surface shape. In case a reflector exists, infrared rays may be reflected by the reflector and output widely to the front side of the electronic apparatus 100, and accordingly, a field of view (FOV) of the first sensor 111 may be improved.

Other than the above, various types of sensors may be further included according to the type or the size, and the function of the electronic apparatus 100.

The processor 120 is a component for controlling operations of the electronic apparatus 100. The processor 120 may be implemented as a digital signal processor (DSP) processing digital signals, a microprocessor, and a timing controller (TCON). However, the disclosure is not limited thereto, and the processor 120 may include one or more of a central processing unit (CPU), a micro controller unit (MCU), a micro processing unit (MPU), a controller, an application processor (AP), or a communication processor (CP), an ARM processor, and an artificial intelligence (AI) processor, or may be defined by the terms. Also, the processor 120 may be implemented as a system on chip (SoC) having a processing algorithm stored therein or large scale integration (LSI), or implemented in the form of a field programmable gate array (FPGA). The processor 120 may perform various functions by executing computer executable instructions stored in the memory 140. In FIG. 2, only one processor 120 was illustrated, but the processor 120 may be implemented as a plurality of processors.

The projection part 130 is a component for projecting an image. The projection part 130 may include a light source, at least one lens (not shown), or a reflector, etc. The projection part 130 may project an image by using one projection method among a cathode-ray tube (CRT) method, a liquid crystal display (LCD) method, a digital light processing (DLP) method, and a laser method.

The projection part 130 may perform various functions according to control by the processor 120. For example, the projection part 130 may adjust a focus of an image, or perform a keystone correction function according to a distance from the bottom surface (e.g.: a projection distance). The keystone correction function means a function of correcting a distorted image. For example, if a distortion of an image occurs in a left-right direction, the projection part 130 may perform a horizontal keystone correction, and if a distortion of an image occurs in an up-down direction, the projection part 130 may perform a vertical keystone correction. Also, in case corners of an area are out of balance, the projection part 130 may perform a quick corner keystone correction for correcting this.

The memory 140 is a component for storing various types of data and programs necessary for operations of the electronic apparatus 100. The memory 140 may be implemented as volatile memory such as static random access memory (S-RAM), dynamic random access memory (D-RAM), etc., non-volatile memory such as flash memory, read only memory (ROM), erasable programmable read only memory (EPROM), electrically erasable programmable read only memory (EEPROM), etc., a hard disk drive (HDD), or a solid state drive (SSD), etc.

The memory 140 may be accessed by the processor 120. The processor 120 may perform operations such as reading/recording/correction/deletion/update, etc. of data for the memory 140. FIG. 2 illustrates a state wherein the memory 140 includes only one processor 120 separately, but depending on embodiments, the memory 140 may be implemented as a plurality of memories, and a memory such as a ROM or a RAM among them may be mounted within the processor 120.

The memory 140 may store various types of data or programs, etc. necessary for identification of a touch point. For example, the aforementioned error map data may be stored in the memory 140. The error map data may be generated in advance before release of the electronic apparatus 100 and stored in the memory 140, but is not necessarily limited thereto. For example, the user of the electronic apparatus 100 may download the error map data in the memory 140 through an external server or a storage medium, etc. Alternatively, the user may update the error map data during use of the electronic apparatus 100.

The projection part 130 may project a display screen or a content image in the direction of the bottom surface on which the projector is placed. Here, the processor 120 may identify a touch point of the user through the IR sensor that emits an infrared signal in a direction parallel to the bottom surface and a camera that performs photographing in the direction of the bottom surface.

The processor 120 controls the projection part 130 to project a random content image according to the user's command. The content image includes various screens such as a screen of an external device to which the electronic apparatus 100 is connected, or a content reproduction screen provided by the external device, a reproduction screen that reproduces multimedia contents provided by other content sources directly on the electronic apparatus 100, an execution screen of an application executed in the electronic apparatus 100, an Internet screen, a still image, a moving image, a document, etc.

The user may perform various interactions by directly touching a content image with his or her finger, etc.

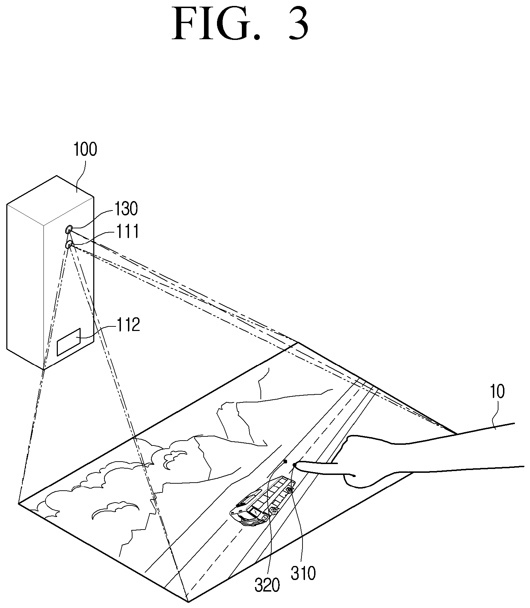

FIG. 3 is a diagram for illustrating a user touch for an electronic apparatus according to at least one embodiment of the disclosure.

FIG. 3 illustrates a state wherein the user 10 is touching a content image projected onto a projection surface through the projection part 130.

The processor 120 detects a touch of the user 10 for the projected content image based on a sensing value of the sensor 110. Specifically, if an infrared reflection signal is detected by the second sensor 112, the processor 120 may recognize that an external object (e.g., the user's finger) touched the bottom surface.

In case the first sensor 111 includes an RGB camera, the processor 120 identifies a part covered by the user's finger on a photographed image photographed by the RGB camera. For example, the processor 120 identifies that a point corresponding to the user's fingertip on an image photographed on a time point when an infrared reflection signal was detected in the second sensor 112 is a touch point. In case the first sensor 111 includes an infrared detection camera, the first sensor 111 may receive an infrared reflection signal reflected by the user's finger. The processor 120 may identify the location of the user's finger based on a brightness value of an image photographed by the infrared detection camera.

Meanwhile, even if a touch point of the user is identified by such a method, an error between the actual touch point and the point identified by the processor 120 may be generated as described above. Specifically, because of an optical characteristic of a lens used in the first sensor 111, a lens shading phenomenon wherein the brightness of an edge area of an image is reduced more than the brightness of the center area may be generated. In this case, a wrong point may be identified as a touch point. Also, brightness of an image varies according to the strength of an infrared reflection signal reflected by an object. In other words, as the distance is farther, the strength of a reflection signal that reaches becomes smaller. Like this, in case a brightness value varies according to a distance from an external object that touches a content image, even if the location of the external object, i.e., a finger is identified according to the brightness of an image, an error may be generated.

Referring to FIG. 3, it can be seen that a point 320 that the processor 120 identified to have been touched is located a little bit more forward than a touch point 310 actually touched by the user 10. This is because whether an object was touched and a touch point, but not a direct touch, are identified through the plurality of sensors 110 of the electronic apparatus 100.

As an error is generated between the touch point 310 actually touched by the user 10 and the identified point 320 recognized by the processor 120, a correction process for reducing such an error value is needed. Specifically, the processor 120 may correct an identified point by using the error map data stored in the memory 140.

The error map data may be generated in advance and stored in the memory 140.

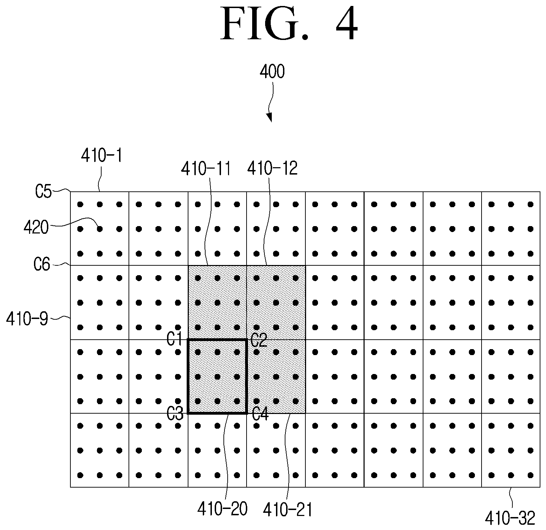

FIG. 4 is a diagram for illustrating a method of generating error map data of an electronic apparatus according to at least one embodiment of the disclosure.

In FIG. 4, a method of generating error map data will be explained first.

For generating an error map 420, a plurality of sample points may be used. The processor 120 may generate a plurality of grids respectively including n*m sample points among the plurality of sample points. The plurality of grids are connected with one another in a form of a square matrix. The number of the grids and the shape of the matrix may be set variously.

If intervals between the corner points are narrowed by increasing the number of the grids, error values may be reduced as there is a lot of data for touch points. However, if intervals between the corner points are narrowed too much, error values are overfitted, and an accidental error that may be generated only in a specific pixel gets to have a high weight, and thus a problem that an error value is corrected wrongly occurs. On the contrary, if intervals between the corner points are widened by decreasing the number of the grids, error values are underfitted, and thus a problem that an error cannot be corrected appropriately occurs. Accordingly, maintaining intervals between the corner points of grids can best reflect an error characteristic.

The processor 120 controls the projection part 130 to project an image including sample points. If the user touches one sample point in such a state, the processor 120 identifies the touch point by using the first sensor 111 and the second sensor 112. As described above, there may be an error between the actual touch point and the identified point. As the processor 120 is aware of the location of the sample point, the processor 120 may calculate an error value by comparing the coordinate values of the identified point and the coordinate values of the sample point. By such a method, the processor 120 may sequentially obtain error values of user touches for a plurality of sample points.

The processor 120 matches an image including a plurality of sample points and a plurality of grids. Accordingly, within one grid, n*m sample points are included. According to the sizes of the grids and the number of the sample points, sample points may or may not overlap on the boundary surfaces and the corner points of each grid. For the sample points that overlap on the boundary surfaces or the corner points, the processor 120 may recognize that they belong to any one grid (e.g., a grid on the left side) among a plurality of grids that overlap according to a predetermined rule.

FIG. 4 illustrates a state wherein it was matched such that nine sample points are arranged within one grid. According to FIG. 4, an error map including 32 grids in total (410-1 - 410-32) may be generated.

The processor 120 identifies corner points of each grid in a state wherein a plurality of sample points and a plurality of grids are matched as in FIG. 4. The corner points may be overlapped on one, two, or four grids according to their locations.

For example, all of the corner points (C1 - C4) of the 20th grid 410-20 located in the center part among the plurality of grids constituted in a square matrix form in FIG. 4 get to be adjacent to four grids. In other words, the corner point C2 may overlap with four grids (410-11, 410-12, 410-20, 410-21). Like this, the processor 120 grants error values for the sample points within four adjacent grids for the corner points in the center part.

In contrast, the corner point C5 of the first grid 410-1 is arranged in the corner part within the square matrix, and is only included in the one grid 410-1. Accordingly, the corner point C5 gets to have error values for the sample points within the one grid 410-1.

In contrast, the corner point C6 of the first grid 410-1 is arranged in an edge part within the square matrix, and is thus included within two grids 410-1, 410-9. Accordingly, the corner point C6 gets to have error values for the sample points within two adjacent grids.

For at least one grid to which the corner points of each grid (410-1 - 410-32) belongs, the processor 120 obtains error values between the coordinate values of the sample points in its inside and the touch identified points for each sample point. Also, the processor 120 calculates weights according to distances between corner points of each grid and sample points within at least one grid to which the corner points belong.

In other words, for calculating an error value of the corner point C2 in FIG. 4, the sample points within the four grids (410-11, 410-12, 410-20, 410-21) may be used.

The processor 120 may calculate error values of each corner point of a plurality of grids by accumulating error values and weights calculated for each of a plurality of sample points. Accordingly, the processor 120 may generate error map data including the error values of the plurality of grids and the corner points of the grids.

If the width of one grid is indicated as W, and the height is indicated as H, and the coordinate of a corner point is assumed as (ga, gb), for a random sample point (a, b) within the area, the processor 120 may obtain a weight of the sample point by using the following formula 1.

[Formula 1]

$$\left(1 - \frac{|a - ga|}{W}\right)\left(1 - \frac{|b - gb|}{H}\right)$$

According to the formula 1, a weight value is bigger as a distance from a corner point is closer, and is smaller as the distance is farther. In case a distance between a corner point and a sample point is close, an error value of the corner point is similar to an error value of the sample point, and thus the weight value may be bigger when the sample point is located to be close to the corner point than when the sample point is located to be far from the corner point.

If there are n sample points in total within one grid, and an x axis error, a y axis error, and a weight of the ith sample point are respectively indicated as $ex_i$, $ey_i$, $w_i$, the processor 120 may calculate an error value of a corner point as in the following formula 2.

[Formula 2]

$$\left(\sum_{i=1}^{n} \frac{w_i}{\sum_{j=1}^{n} w_j} \times e\,x_i, \quad \sum_{i=1}^{n} \frac{w_i}{\sum_{j=1}^{n} w_j} \times e\,y_i\right)$$

The processor 120 calculates error values of corner points by using sample points included in one, two, or four grids according to the location of the corner points of each grid.

For example, among a plurality of grids constituted in a square matrix form as in FIG. 4, for the corner point C2 of the grid 410-20 located in the center part, the processor 120 generates error map data by using sample points included in four adjacent grids (410-11, 410-12, 410-20, 410-21).

The processor 120 may store the error map data generated by such a method in the memory 140.

If a user touch is identified as described above while the electronic apparatus 100 is being used afterwards, the processor 120 may recognize an actual touch point by correcting the identified point by using the error map data.

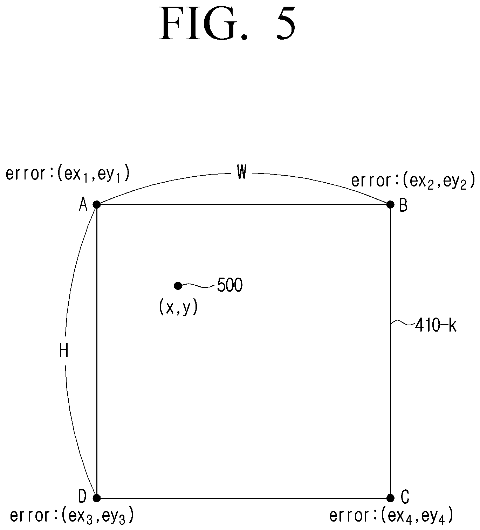

FIG. 5 is a diagram for illustrating a process of correcting a user touch point according to at least one embodiment of the disclosure.

Referring to FIG. 5, a case wherein an identified point where it was identified that the user 10 touched a projected image was recognized as (x, y) is illustrated.

The processor 120 identifies a grid including the identified point among the plurality of grids, and obtains error values of each corner point of the grid. In the case of FIG. 5, it can be seen that each corner point of the grid including the identified point is illustrated as A, B, C, D. The processor 120 calculates an error value of the identified point based on the error values of the corner points.

As an example, the processor 120 may calculate an error value by using the following formula 3.

[Formula 3]

$$e_x = \left(1 - \frac{x-l}{W}\right)\left(1 - \frac{y-t}{H}\right)ex_1 + \frac{r-x}{W}\left(1 - \frac{y-t}{H}\right)ex_2 + \left(1 - \frac{x-l}{W}\right)\frac{b-y}{H}ex_3 + \frac{r-x}{W}\frac{b-y}{H}ex_4$$

$$e_y = \left(1 - \frac{x-l}{W}\right)\left(1 - \frac{y-t}{H}\right)ey_1 + \frac{r-x}{W}\left(1 - \frac{y-t}{H}\right)ey_2 + \left(1 - \frac{x-l}{W}\right)\frac{b-y}{H}ey_3 + \frac{r-x}{W}\frac{b-y}{H}ey_4$$

In the formula 3, $e_x$ means an x axis error value, $e_y$ means a y axis error value, and l, b, r, t mean x, y coordinate values of four adjacent corner points A(l,t), B(r,t), C(r,b), D(l,b).

When an error value ($e_x$, $e_y$) is calculated, the processor 120 obtains a corrected coordinate by subtracting the error value ($e_x$, $e_y$) from the coordinate value of the identified point 500. The processor 120 identifies the corrected coordinate as the actual touch point. For example, in case the coordinate of an identified point that was identified as the user 10 touched a projected content image is (4, 4), if a predicted error value calculated by the processor 120 is (0.95, 0.93), the corrected coordinate of the point becomes (3.05, 3.07). In case the point actually touched by the user 10 is (3, 3), even though there is a slight error between the actual touch point and the corrected coordinate of the point, the processor 120 recognizes that a point that has a minimum error from the actually touched point was touched.

As described above, the number of grids may vary depending on embodiments. As the size of an error value may vary according to the number or the sizes of grids, they may be set appropriately through experiments.

As an example, touch error values measured for each number of grids based on 50 inches are as follows.

[Table 1]

| Number of Grids | Mean error |
|---|---|
| 5*3 | 2.40 mm |
| 7*4 | 2.21 mm |
| 9*5 | 2.17 mm |
| 11*6 | 2.18 mm |
| 13*7 | 2.18 mm |

In the case of a conventional projector, there was an error of 5mm or bigger in touch accuracy, but according to the embodiments of the disclosure, the error gets to decrease by 2mm or bigger at the minimum although there are differences according to the number of the grids. Meanwhile, the aforementioned error map data may be generated through experiments in a company that manufactured the electronic apparatus 100 or other related companies before selling the electronic apparatus 100, and stored in the memory 140.

The content explained in FIG. 4 explains a case of generating error map data by using the electronic apparatus 100 itself, but error map data generated in another device may be stored in the memory 140 of the electronic apparatus 100 as it is and used. Accordingly, in case the electronic apparatus 100 is used in an actual environment, correction performance by error map data that was previously generated and stored may not be satisfactory. Also, while the user is using the electronic apparatus 100, there may be a case wherein a situation that the location of the electronic apparatus 100 or the height or the incline of the projection surface is changed may occur.

In such a case, the user may use a calibration function.

Calibration means a process of identifying accuracy of a measurement device or a system, and adjusting the accuracy.

The user may select the calibration function by using a button provided on the electronic apparatus 100 or a remote control button, a UI of a smartphone connected to the electronic apparatus 100, etc. As an example, on the body of the electronic apparatus 100 or a remote control, a button to which the calibration function is matched may be provided, and if the user selects the button, the processor 120 may execute the calibration function. Alternatively, in case the user pushes a setting button by using various types of buttons, etc., the processor 120 may control the projection part 130 to project a setting screen including a calibration menu and other setting menus. If the user selects the calibration menu among them, the processor 120 may execute the calibration function.

For the calibration function, a test image may be stored in the memory 140. The test image means an image including a plurality of sample points.

When the calibration function is executed, the processor 120 generates error map data by a method identical or similar to the content explained in FIG. 4. Specifically, the processor 120 controls the projection part 130 to project a test image.

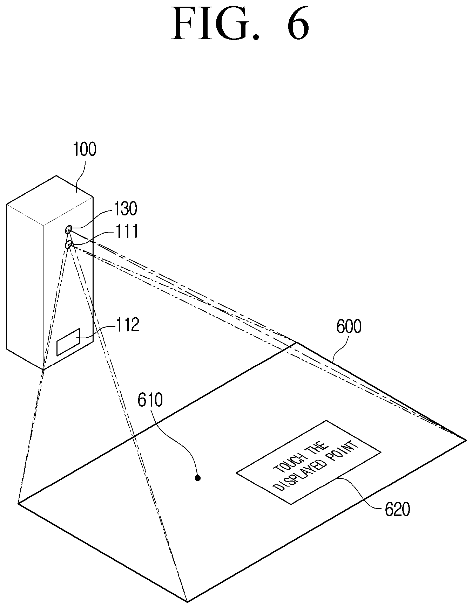

FIG. 6 is a diagram for illustrating a calibration method according to at least one embodiment of the disclosure.

The processor 120 may show a plurality of sample points simultaneously, but as in FIG. 6, the processor 120 may control the projection part 130 to display a test image 600 including one sample point 610.

In this case, for inducing the user to normally proceed with calibration, the processor 120 may control the projection part 130 to display a guide message 620 together. When the user touches the sample point 610 according to the content of the guide message 620, the processor 120 identifies a touch point by using the first and second sensors 111, 112. When an error value and a weight for the one sample point are calculated, the processor 120 may control the projection part 130 to display the test image 600 including the next sample point. When touches for the plurality of sample points are completed by such a method, the processor 120 calculates error values of corner points enclosing each sample point.

In the case of an embodiment that shows a plurality of sample points simultaneously, the processor 120 may induce a touch of the user by sequentially changing the location of the guide message 620, or displaying an arrow or other marks indicating adjacent sample points within the guide message 620 together. Alternatively, the processor 120 may describe numbers or other identification signs beside each sample point, and display a phrase sequentially specifying each sample point (e.g., select the point No. 1) in the guide message, and thereby induce the user to select the sample points.

When each sample point is touched by such a method, the processor 120 may obtain error values of corner points of a grid according to touch errors for each sample point. As a specific method in this regard was described in the explanation part for FIG. 4, overlapping explanation will be omitted.

The processor 120 updates the error values stored in the memory 140 by adjusting them to newly calculated error values.

As described above, a calibration process may proceed similarly to the process of generating error map data explained in FIG. 4. However, if a process of executing the calibration function is too long or complex, it may be difficult for the user to perform it by himself/herself. Accordingly, the number of sample points used in calibration may be set as a number smaller than the number of sample points used when generating error map data initially. However, this is merely an example, and in the calibration process, sample points in the same number as the time point of initial generation may be used, or more sample points may be additionally used.

Alternatively, when the first calibration is performed, the processor 120 may perform calibration by using sample points in a small number, and when the calibration function is executed again afterwards, the processor 120 may perform calibration in a state of having increased the number of the sample points.

Meanwhile, FIG. 1 illustrates a case wherein the user projects a content image onto a bottom surface in the front while the electronic apparatus 100 is placed on the front side of the user, but the user may randomly change the location of the electronic apparatus 100 or the projection direction. For example, the user may place the electronic apparatus 100 on his/her left front side or right front side. In this case, the grid form may become different from when a content image is projected on the front side. In other words, when a content image is projected on the front side, the user sees a content image in a form wherein the horizontal direction is longer than the vertical direction, but when a content image is projected on the side, the user sees a content image in a form wherein the vertical direction is longer than the horizontal direction. Accordingly, in the case of performing calibration, the shape of a test image may vary according to the location of the user. If the sensor 110 of the electronic apparatus 100 includes a sensor detecting the location of the user, the processor 120 may detect the location of the user based on a sensing result of the sensor 110, and control the projection part 130 to display a test image differently according to the location.

In the case of generating an error map other than a calibration task, some operations may vary according to the locational relation of the electronic apparatus 100 and the user. For example, in case the user touches with the right hand while the electronic apparatus 100 is located on the right side of the user and is projecting onto the front side of the user, the processor 120 may sense the touched area based on the rightmost side of the finger but not the fingertip when recognizing the touch location of the user. Accordingly, in the case of generating error map data, the shape of an error map data generation image and a recognition point of a touch location may vary according to the location of the user.

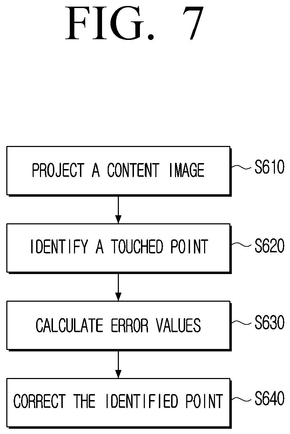

FIG. 7 is a flow chart for illustrating a control method for an electronic apparatus according to at least one embodiment of the disclosure.

Referring to FIG. 7, the electronic apparatus may project a content image on a projection surface by using a projection part in the step S610.

The electronic apparatus may identify whether there is a touch of the user by using an IR sensor for detecting a movement of an external object along the bottom surface, and a camera that receives an IR reflection signal or a reflected light in the direction of the bottom surface, etc. in the step S620. In the disclosure, a touch may include a case wherein an external object approached a location that is detectable at the IR sensor of the electronic apparatus, even though the external object did not actually contact the bottom surface.

When the user's touch is identified, the electronic apparatus performs a process of calculating an error value of the point wherein the user was identified based on pre-stored error map data (S630), and correcting the identified point based on the coordinate values of the identified point and the calculated error value and recognizing the point as the actually touched point (S640).

As the error map data, the operation of calculating an error value by using the error map data, and a correcting operation were described in detail in the aforementioned several embodiments, overlapping explanation will be omitted.

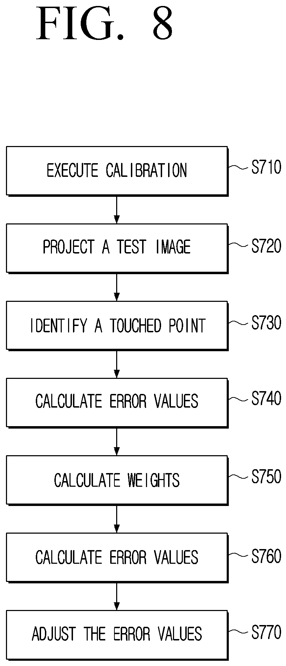

FIG. 8 is a flow chart for illustrating a method of performing a calibration function of an electronic apparatus according to at least one embodiment of the disclosure.

When a calibration function is executed in the step S710, the electronic apparatus projects a test image including a plurality of sample points onto a projection surface in the step S720. Depending on embodiments, the electronic apparatus may show the plurality of sample points to the user at once, or sequentially show them one by one. Also, the electronic apparatus may display a guide message inducing the user to actually touch each sample point together.

When the user sequentially touches each of the plurality of sample points within the test image, the electronic apparatus identifies the touched point in the step S730.

The electronic apparatus calculates error values by comparing coordinate values of each of the plurality of sample points and coordinate values of the point identified to have been touched in the step S740.

While a test image including a plurality of new sample points and a plurality of grids are matched, the electronic apparatus identifies corner points of a grid enclosing each of the plurality of sample points, and calculates weights according to distances between the identified corner points and the plurality of sample points in the step S750. Afterwards, the electronic apparatus calculates error values of each corner point of the grid by accumulating the calculated error values and the weights for each of the plurality of sample points in the step S760. The electronic apparatus performs a process of adjusting the error values of the corner points of the grid stored in advance based on the calculated error values in the step S770.

Meanwhile, in the step of calculating the weights for the sample points according to distances between the identified corner points and the plurality of sample points, the weights of the sample points are calculated through the formula 1. As the process of calculating the weights was explained in detail in the aforementioned parts, explanation in that regard will be omitted.

In the step of calculating the error values of the corner points of the grid by accumulating the calculated error values and the weights for each of the plurality of sample points, the error values of the corner points of the grid are calculated through the formula 2. As the process of calculating the error values of the corner points was explained in detail in the aforementioned parts, explanation in that regard will be omitted.

In the step of correcting the identified point based on coordinate values and the error values of the identified point identified by the user's touch, and recognizing the point as the actual touch point, the coordinate values of the identified point are corrected by calculating error values of the identified point through the formula 3, and subtracting the error values from the coordinate values of the identified point, and then the actual touch point is identified. As the process of correcting the identified point and identifying the point as the actual touch point was explained in detail in the aforementioned parts, explanation in that regard will be omitted.

In a process of touching a content image projected onto a projection surface through the electronic apparatus, for correcting an error between an actual touch point of the user and an identified point that was identified by the electronic apparatus, error map data including error values is needed. As a process of generating error map data was also explained in FIG. 4, overlapping explanation will be omitted.

The contents explained in FIG. 7 and FIG. 8 may be performed by an electronic apparatus having a configuration as illustrated in FIG. 1, but are not necessarily limited thereto, and they may be performed in electronic apparatuses having various configurations or external electronic apparatuses connected with the electronic apparatuses.

In the above, various embodiments were explained individually or in combination with one another, but each embodiment does not have to be necessarily implemented individually, and they may be combined on the whole or partially with at least one other embodiment and implemented as one device.

Also, according to the aforementioned various embodiments, an electronic apparatus may firstly identify that a user touches a point within a content image while projecting the content image, and then correct this, and may thereby determine the actual touch point intended by the user. The electronic apparatus may perform different operations according to a graphic object displayed on the actual touch point.

For example, in case a portal site is being displayed, if it is recognized that one post on the site was selected, the electronic apparatus may display a detailed screen for the post. Alternatively, if it is recognized that an application icon was selected, the electronic apparatus may execute an application corresponding to the selected icon.

In case a subject providing the content image that is being projected is an external device, the electronic apparatus may transmit coordinate values of the actual touch point to the external device, and make the external device recognize that there was a user selection for the coordinate values, but the disclosure is not necessarily limited thereto. For example, the electronic apparatus may directly recognize a graphic object displayed on the actual touch point, and transmit a control signal corresponding to the graphic object to the external device.

In case a graphic object is not correctly located on the actual touch point after correction, the electronic apparatus may not perform any operation, but depending on embodiments, the electronic apparatus may recognize that the most adjacent graphic object among graphic objects within a predetermined error range was selected.

The aforementioned various embodiments may be implemented as software including instructions stored in machine-readable storage media, which can be read by machines (e.g.: computers). The machines refer to apparatuses that call instructions stored in a storage medium, and can operate according to the called instructions, and the apparatuses may include an electronic apparatus according to the aforementioned embodiments (e.g.: the electronic apparatus 100). In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not distinguish whether data is stored in the storage medium semi-permanently or temporarily.

Also, according to an embodiment of the disclosure, the method according to the aforementioned various embodiments may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or distributed on-line through an application store (e.g.: Play Store™). In the case of on-line distribution, at least a portion of a computer program product may be stored in a storage medium such as the server of the manufacturer, the server of the application store, and the memory of the relay server at least temporarily, or may be generated temporarily.

In addition, computer instructions or programs for performing the control method or the method of generating error map data according to the aforementioned various embodiments may be stored in a non-transitory computer-readable medium. Computer instructions stored in such a non-transitory computer-readable medium make the processing operations at machines according to the aforementioned various embodiments performed by a specific machine, when the instructions are executed by the processor of the specific machine. A non-transitory computer-readable medium refers to a medium that stores data semi-permanently, and is readable by machines, but not a medium that stores data for a short moment such as a register, a cache, and memory. As specific examples of a non-transitory computer-readable medium, there may be a CD, a DVD, a hard disc, a blue-ray disc, a USB, a memory card, ROM, and the like.

While preferred embodiments of the disclosure have been shown and described, the disclosure is not limited to the aforementioned specific embodiments, and it is apparent that various modifications may be made by a person having ordinary knowledge in the art to which the disclosure belongs, without departing from the gist of the disclosure as claimed by the appended claims. Further, it is intended that such modifications are not to be interpreted independently from the technical idea or prospect of the disclosure.

**Claims**

1. An electronic apparatus comprising:

    a projection part;
    a plurality of sensors;
    memory storing error map data including a plurality of grids set for correction of a touch point and error values of each corner point of the grids; and
    a processor,
    wherein the processor is configured to:

        control the projection part to project a content image onto a projection surface,
        identify a touch point of a user for the content image projected onto the projection surface based on sensing values of the plurality of sensors,
        calculate an error value of the identified touch point based on error values of each corner point of a grid including the identified touch point among the plurality of grids, and
        recognize an actual touch point by correcting the identified touch point based on coordinate values of the identified touch point and the error value of the identified touch point.

2. The electronic apparatus of claim 1,

wherein the memory further stores a test image including a plurality of sample points, and
the processor is configured to:

based on a calibration function being executed, control the projection part to project the test image,
based on the plurality of sample points being sequentially touched, identify a touched point,
calculate error values by comparing coordinate values of each of the plurality of sample points and the coordinate values of the identified touch point,
while the test image and the plurality of grids are matched, identify corner points of a grid enclosing each of the plurality of sample points to calculate weights according to distances between the identified corner points and the plurality of sample points,
calculate error values of each corner point of the grid by accumulating the calculated error values and the weights for each of the plurality of sample points, and
adjust the error values of each corner point of the grid stored in the memory to the calculated error values.

3. The electronic apparatus of claim 2,
wherein the processor is configured to:

calculate a weight of the sample point by using a formula such as $\left(1-\dfrac{|a-ga|}{W}\right)\left(1-\dfrac{|b-gb|}{H}\right)$ , and

in the formula, W is a width of one grid, H is a height of the one grid, a is an x coordinate value of the sample point, b is a y coordinate value of the sample point, ga is an x coordinate value of the corner point, and gb is a y coordinate value of the corner point.

4. The electronic apparatus of claim 2,
wherein the processor is configured to:

calculate an error value of a corner point of the grid by using a formula such as

$$\left(\sum_{i=1}^{n}\frac{w_i}{\sum_{j=1}^{n}w_j}\times ex_i,\quad \sum_{i=1}^{n}\frac{w_i}{\sum_{j=1}^{n}w_j}\times ey_i\right), \text{ and}$$

in the formula, for an ith sample point among n sample points, $ex_i$ is an x coordinate error value, $ey_i$ is a y coordinate error value, and $w_i$ is a weight.

5. The electronic apparatus of claim 1,
wherein the processor is configured to:

calculate error values (ex, ey) of the identified touch point by using a formula such as

$$e_x=\left(1-\frac{x-l}{W}\right)\left(1-\frac{y-t}{H}\right)ex_1+\frac{r-x}{W}\left(1-\frac{y-t}{H}\right)ex_2+\left(1-\frac{x-l}{W}\right)\frac{b-y}{H}ex_3+\frac{r-x}{W}\frac{b-y}{H}ex_4$$

$$e_y=\left(1-\frac{x-l}{W}\right)\left(1-\frac{y-t}{H}\right)ey_1+\frac{r-x}{W}\left(1-\frac{y-t}{H}\right)ey_2+\left(1-\frac{x-l}{W}\right)\frac{b-y}{H}ey_3+\frac{r-x}{W}\frac{b-y}{H}ey_4$$

identify the actual touch point by correcting the coordinate values of the identified point by subtracting the error values from the coordinate values of the identified point, and
in the formula, $e_x$ is an x coordinate error value, $e_y$ is a y coordinate error value, and l, b, r, t are x and y coordinate values of four adjacent corner points.

6. The electronic apparatus of claim 1,
wherein the projection part is configured to:

project the content image in a direction of a bottom surface on which the electronic apparatus is placed, and
the plurality of sensors comprise:

an infrared (IR) sensor configured to emit an IR signal in a direction parallel to the bottom surface; and
a camera configured to perform photographing in a direction of the bottom surface, and
the processor is configured to:
identify the touch point of the user based on a detection result of the IR sensor and a photographing result of
the camera while the content image is projected onto the bottom surface.

7. The electronic apparatus of claim 1,

wherein the plurality of grids are arranged in a form of a square matrix,
corner points arranged in a center part within the square matrix have error values for sample points within four
adjacent grids,
corner points arranged in edge parts within the square matrix have error values for sample points within two
adjacent grids, and
corner points arranged in corner parts within the square matrix have error values for sample points within one grid.

8. The electronic apparatus of claim 2,

wherein the number of the plurality of grids is set differently according to a size of the display, and
the number of the sample points within the test image is fewer than the number of sample points used for
generation of the error map data stored in the memory.

9. A control method for an electronic apparatus, the method comprising:

projecting a content image onto a projection surface;
identifying a point touched by a user for the content image projected onto the projection surface;
calculating an error value of the identified touch point based on pre-stored error map data; and
recognizing an actual touch point by correcting the identified touch point based on coordinate values of the
identified touch point and the error value of the identified touch point,
wherein the error map data comprises:
a plurality of grids set for correction of a touch point and error values of each corner point of the grids.

10. The control method of claim 9, comprising:

based on a calibration function being executed, projecting a test image including a plurality of sample points onto
the projection surface;
based on the plurality of sample points being sequentially touched, identifying a touched point;
calculating error values by comparing coordinate values of each of the plurality of sample points and the
coordinate values of the identified touch point;
while the test image and the plurality of grids are matched, identifying corner points of a grid enclosing each of the
plurality of sample points to calculate weights according to distances between the identified corner points and the
plurality of sample points;
calculating error values of each corner point of the grid by accumulating the calculated error values and the
weights for each of the plurality of sample points; and
adjusting the error values of each corner point of the grid to the calculated error values.

11. The control method of claim 10,
wherein the calculating weights according to the distances between the identified corner points and the plurality of
sample points comprises:

calculating a weight of the sample point by using a formula such as $\left(1-\dfrac{|a-ga|}{W}\right)\left(1-\dfrac{|b-gb|}{H}\right)$ , and

in the formula, W is a width of one grid, H is a height of the one grid, a is an x coordinate value of the sample point, b is a y coordinate value of the sample point, ga is an x coordinate value of the corner point, and gb is a y coordinate value of the corner point.

12. The control method of claim 10,
wherein the calculating error values of each corner point of the grid by accumulating the calculated error values and the weights for each of the plurality of sample points comprises:

calculating an error value of a corner point of the grid by using a formula such as

$$\left( \sum_{i=1}^{n} \frac{w_i}{\sum_{j=1}^{n} w_j} \times e x_i, \quad \sum_{i=1}^{n} \frac{w_i}{\sum_{j=1}^{n} w_j} \times e y_i \right) , \text{ and}$$

in the formula, for an ith sample point among n sample points, $ex_i$ is an x coordinate error value, $ey_i$ is a y coordinate error value, and $w_i$ is a weight.

13. The control method of claim 9,
wherein the recognizing the actual touch point by correcting the identified touch point based on coordinate values of the identified touch point and the error value of the identified point comprises:

calculating error values (ex, ey) of the identified touch point by using a formula such as

$$e_x = (1 - \frac{x \cdot l}{W})(1 - \frac{y \cdot t}{H}) e x_1 + \frac{r \cdot x}{W}(1 - \frac{y \cdot t}{H}) e x_2 + (1 - \frac{x \cdot l}{W})\frac{b \cdot y}{H} e x_3 + \frac{r \cdot x}{W}\frac{b \cdot y}{H} e x_4$$

$$e_y = (1 - \frac{x \cdot l}{W})(1 - \frac{y \cdot t}{H}) e y_1 + \frac{r \cdot x}{W}(1 - \frac{y \cdot t}{H}) e y_2 + (1 - \frac{x \cdot l}{W})\frac{b \cdot y}{H} e y_3 + \frac{r \cdot x}{W}\frac{b \cdot y}{H} e y_4 ;$$

identifying the actual touch point by correcting the coordinate values of the identified touch point by subtracting the error values from the coordinate values of the identified touch point, and
in the formula, $e_x$ is an x coordinate error value, $e_y$ is a y coordinate error value, and l, b, r, t are x and y coordinate values of four adjacent corner points.

14. The control method of claim 9,

wherein the plurality of grids are arranged in a form of a square matrix,
corner points arranged in a center part within the square matrix have error values for sample points within four adjacent grids,
corner points arranged in edge parts within the square matrix have error values for sample points within two adjacent grids, and
corner points arranged in corner parts within the square matrix have error values for sample points within one grid.

15. A non-transitory computer-readable recording medium storing computer instructions which, when executed by a processor of an electronic apparatus, cause the electronic apparatus to perform operations,
wherein the operations comprise:

projecting a content image onto a projection surface;
identifying a point touched by a user for the content image projected onto the projection surface;
calculating an error value of the identified touch point based on pre-stored error map data; and
recognizing an actual touch point by correcting the identified touch point based on coordinate values of the identified touch point and the error value of the identified touch point, and
wherein the error map data comprises:
a plurality of grids set for correction of a touch point and error values of each corner point of the grids.

# FIG. 1

# FIG. 2

# FIG. 3

# FIG. 4

# FIG. 5

# FIG. 6

# FIG. 7

PROJECT A CONTENT IMAGE — S610

IDENTIFY A TOUCHED POINT — S620

CALCULATE ERROR VALUES — S630

CORRECT THE IDENTIFIED POINT — S640

# FIG. 8

```
┌─────────────────────────┐
│   EXECUTE CALIBRATION    │── S710
└─────────────────────────┘
            │
            ▼
┌─────────────────────────┐
│    PROJECT A TEST IMAGE  │── S720
└─────────────────────────┘
            │
            ▼
┌─────────────────────────┐
│  IDENTIFY A TOUCHED POINT│── S730
└─────────────────────────┘
            │
            ▼
┌─────────────────────────┐
│   CALCULATE ERROR VALUES │── S740
└─────────────────────────┘
            │
            ▼
┌─────────────────────────┐
│     CALCULATE WEIGHTS    │── S750
└─────────────────────────┘
            │
            ▼
┌─────────────────────────┐
│   CALCULATE ERROR VALUES │── S760
└─────────────────────────┘
            │
            ▼
┌─────────────────────────┐
│   ADJUST THE ERROR VALUES│── S770
└─────────────────────────┘
```

## INTERNATIONAL SEARCH REPORT

| International application No. |
| --- |
| **PCT/KR2024/014431** |

| A. | CLASSIFICATION OF SUBJECT MATTER |
| --- | --- |

**G06F 3/01**(2006.01)i; **H04N 13/363**(2018.01)i

According to International Patent Classification (IPC) or to both national classification and IPC

| B. | FIELDS SEARCHED |
| --- | --- |

Minimum documentation searched (classification system followed by classification symbols)

G06F 3/01(2006.01); G03B 21/14(2006.01); G06F 3/041(2006.01); G06F 3/042(2006.01); G06T 5/00(2006.01); G09G 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프로젝션(projection), 센서(sensor), 터치(touch), 지점(point), 보정 (correction), 그리드(grid), 코너(corner), 에러 맵(error map), 좌표(coordinate), 테스트(test), 캘리브레이션 (calibration), 샘플 포인트(sample point), 매칭(matching), 거리(distance), 가중치(weight)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2016-0349918 A1 (INTEL CORPORATION) 01 December 2016 (2016-12-01) See paragraphs [0011], [0036] and [0043]; and claims 1-3, 11 and 21. | 1,6,9,15 |
| A | | 2-5,7-8,10-14 |
| Y | US 2004-0207600 A1 (ZHANG, Zhengyou et al.) 21 October 2004 (2004-10-21) See paragraph [0010]; and claims 3-4. | 1,6,9,15 |
| A | CN 108363519 A (INSTITUTE OF AUTOMATION, CHINESE ACADEMY OF SCIENCES et al.) 03 August 2018 (2018-08-03) See paragraphs [0060]-[0124]; claims 1 and 3-4; and figures 1-8. | 1-15 |
| A | US 2020-0126462 A1 (HEWLETT-PACKARD DEVELOPMENT COMPANY, L.P.) 23 April 2020 (2020-04-23) See paragraphs [0018]-[0035]; claim 1; and figures 1-7B. | 1-15 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 January 2025** | **14 January 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/014431** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2022-0168379 A (VVR CO., LTD.) 23 December 2022 (2022-12-23)<br>See paragraphs [0022]-[0098]; claims 1-6; and figures 1-6. | 1-15 |

Form PCT/ISA/210 (second sheet) (July 2022)

**INTERNATIONAL SEARCH REPORT**
Information on patent family members

International application No.

**PCT/KR2024/014431**

| Patent document cited in search report | | | Publication date (day/month/year) | Patent family member(s) | | | Publication date (day/month/year) |
|---|---|---|---|---|---|---|---|
| US | 2016-0349918 | A1 | 01 December 2016 | WO | 2016-195822 | A1 | 08 December 2016 |
| US | 2004-0207600 | A1 | 21 October 2004 | US | 6774889 | B1 | 10 August 2004 |
| | | | | US | 7342572 | B2 | 11 March 2008 |
| CN | 108363519 | A | 03 August 2018 | CN | 108363519 | B | 31 March 2020 |
| US | 2020-0126462 | A1 | 23 April 2020 | US | 11393366 | B2 | 19 July 2022 |
| | | | | WO | 2019-013758 | A1 | 17 January 2019 |
| KR | 10-2022-0168379 | A | 23 December 2022 | KR | 10-2495545 | B1 | 06 February 2023 |

Form PCT/ISA/210 (patent family annex) (July 2022)